# FASCICULE DE BREVET EUROPEEN

(11) **EP 4 011 714 B1**
(45) Date de publication et mention de la délivrance du brevet: **05.07.2023**
(21) Numéro de dépôt: 21212797.1
(22) Date de dépôt: 07.12.2021
(51) Int. Cl.: B60R 22/18, B60R 22/20, B60R 22/26

(54) **DISPOSITIF D'ACCROCHAGE DE BOUCLE DE CEINTURE DE SÉCURITÉ**
VORRICHTUNG ZUM EINHAKEN EINES SICHERHEITSGURTSCHLOSSES
DEVICE FOR ATTACHING A BUCKLE FOR SEATBELT

(30) Priorité: 10.12.2020 FR 2012993
(43) Date de publication de la demande: 15.06.2022
(73) Titulaire: Renault s.a.s, 92100 Boulogne Billancourt (FR)
(72) Inventeur: ROUXEL, Yves, 78320 La Verriere (FR); DE MANEVILLE, Gael, 14470 Courseulles sur mer (FR)
(74) Mandataire: Renault Group

(56) Documents cités:
- EP-A1- 3 381 753
- DE-A1-102007 019 711

## Description

### DOMAINE TECHNIQUE DE L'INVENTION

La présente invention concerne de manière générale la sécurité des occupants d'un véhicule automobile.

Elle concerne plus particulièrement un dispositif d'accrochage de boucle de ceinture de sécurité (communément appelé « brin-boucle ») qui est conçu pour être monté sur un siège de véhicule automobile.

L'invention concerne plus particulièrement un brin-boucle comportant :
- une partie d'assujettissement d'une boucle de ceinture de sécurité (communément appelée la « gâche » ou « gâche pédoncule »), qui est située à l'extrémité d'une tige,
- un arbre d'articulation adapté à être monté mobile en rotation sur ledit siège, autour d'un axe géométrique, et
- des moyens de montage de la tige sur cet arbre d'articulation.

L'invention trouve une application particulièrement avantageuse dans le montage de brin-boucle sur des sièges de type « Parère », c'est-à-dire des sièges dont les assises sont adaptées à basculer vers l'avant et dont les dossiers sont adaptés à basculer vers l'avant, en lieu et place de l'assise.

L'invention concerne également un siège équipé d'un tel brin-boucle, et un véhicule automobile équipé d'un tel siège.

### ETAT DE LA TECHNIQUE

Les véhicules automobiles comportent généralement au moins deux sièges équipés chacun d'une ceinture de sécurité et d'un brin-boucle permettant de verrouiller la boucle de ceinture de sécurité.

Le brin-boucle est généralement fixé au châssis du véhicule ou à la structure du siège, en un point de liaison choisi de façon à ce qu'il puisse résister à de gros efforts, notamment en cas d'accident.

Pour offrir une grande modularité aux véhicules, il est connu de pouvoir replier certains des sièges de façon à libérer de l'espace de chargement.

Lorsque le siège est en position d'utilisation, le brin-boucle doit être facilement accessible à l'usager, de façon à ce que ce dernier puisse aisément y verrouiller la boucle de sa ceinture de sécurité. Le risque est alors que lorsque le siège est en position repliée, le brin-boucle dépasse du siège et forme un obstacle au chargement du véhicule.

Il est alors connu du document EP3381753, qui divulgue un dispositif d'accrochage conforme au préambule de la revendication 1, de monter le brin-boucle de telle sorte qu'il pivote à la faveur du basculement du dossier, de façon à ne pas gêner le chargement du véhicule et à ne pas être détérioré par ce chargement. La solution divulguée dans ce document consiste alors à fixer le brin-boucle sur un axe du siège qui pivote lorsque le dossier bascule, de façon à ce que le brin-boucle puisse basculer à la faveur du basculement du dossier vers l'avant.

L'inconvénient majeur de la solution divulguée dans ce document est qu'elle pose des problèmes de logistique et de montage.

En effet, en règle générale, la gâche du brin-boucle munie de sa tige est livrée sur l'usine d'assemblage du véhicule, sans aucune autre pièce. La solution divulguée dans ce document nécessite donc de prévoir, à côté du poste d'assemblage du siège, les moyens de montage du brin-boucle sur le siège (visserie, ressorts...), ce qui s'avère en pratique contraignant.

### PRESENTATION DE L'INVENTION

On cherche alors une solution permettant de fixer au préalable les moyens de montage du brin-boucle sur le siège, afin que l'installateur n'ait plus qu'à visser la tige du brin-boucle sur ces moyens de montage sans nécessiter d'installer aucune autre pièce.

Pour cela, la présente invention propose un brin-boucle tel que défini dans l'introduction, dans lequel les moyens de montage du brin-boucle comprennent :
- une bague qui est montée sur l'arbre d'articulation et qui comporte un moyen d'arrêt adapté à bloquer en translation (selon l'axe géométrique de l'arbre d'articulation) la bague par rapport audit arbre d'articulation, et
- une rondelle d'entraînement qui est montée sur l'arbre d'articulation et qui comporte :
   ¤ un moyen de blocage en rotation permettant de bloquer en rotation autour de l'axe géométrique la rondelle d'entraînement par rapport à l'arbre d'articulation,
   ¤ un moyen d'entraînement de la tige permettant d'entraîner le pivotement de la tige autour de l'axe géométrique à la faveur du pivotement de l'arbre d'articulation, et
   ¤ un moyen d'assujettissement permettant de bloquer en translation selon l'axe géométrique la rondelle d'entraînement par rapport à la bague.

Ainsi, grâce à l'invention, le montage du brin boucle s'effectue en positionnant la bague et la rondelle d'entraînement sur l'arbre d'articulation, jusque dans une position où ces éléments sont assemblés de telle façon que la bague et la rondelle d'entraînement sont imperdables.

Dès lors, le reste du montage du brin-boucle peut s'effectuer simplement, par exemple en vissant la tige du brin-boucle sur l'arbre d'articulation.

D'autres caractéristiques avantageuses et non limitatives du brin-boucle conforme à l'invention, prises individuellement ou selon toutes les combinaisons techniquement possibles, sont les suivantes :
- la rondelle d'entraînement comporte une plaque percée d'une ouverture pour son montage sur l'arbre d'articulation ;
- le moyen d'assujettissement comporte deux pattes qui s'étendent à partir de la plaque, de façon diamétralement opposée, et qui sont recourbées l'une vers l'autre ;
- la bague présente, en creux dans sa face externe, une gorge périphérique à l'intérieur de laquelle sont engagées les deux pattes ;
- le moyen de blocage en rotation est formé par le bord de ladite ouverture, qui présente une dissymétrie de révolution autour dudit axe géométrique et qui est emboîté sur une partie de forme correspondante de l'arbre d'articulation ;
- le moyen d'entraînement comporte deux bras qui s'étendent à partir de la plaque et qui sont recourbés d'un même côté de la plaque ;
- les deux bras sont conformés de telle sorte qu'ils sont simultanément au contact de la tige (ainsi, la tige est montée sans jeu sur la rondelle d'entraînement) ;
- il est prévu une vis de fixation qui est enfilée au travers d'un orifice de la tige et qui est vissée dans l'arbre d'articulation ;
- il est prévu une rondelle ondulée qui est engagée sur la vis de fixation, entre la tête de la vis de fixation et la tige ;
- le moyen d'arrêt comporte un élément d'encliquetage de la bague sur ledit arbre d'articulation.

L'invention concerne aussi un siège comportant un support, une assise montée sur le support, un dossier monté sur le support avec une mobilité de basculement, et un dispositif d'accrochage tel que précité.

L'invention concerne également un véhicule automobile comportant un châssis, un siège conducteur monté sur le châssis en face d'un volant, et un siège passager tel que précité monté sur le châssis à côté du siège conducteur.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective de deux sièges d'un véhicule automobile, représentés en position d'utilisation ;
[Fig. 2] est une vue homologue de celle de la figure 1, sur laquelle un premier des deux sièges est en position repliée ;
[Fig. 3] est une vue schématique en perspective éclatée des éléments nécessaire au montage d'un brin-boucle conforme à l'invention sur le premier siège de la figure 2 ;
[Fig. 4] est une vue en coupe du brin-boucle de la figure 3 ;
[Fig. 5] illustre une première étape de montage du brin-boucle de la figure 3 sur le siège de la figure 2 ; et
[Fig. 6] illustre une seconde étape de montage du brin-boucle de la figure 3 sur le siège de la figure 2.

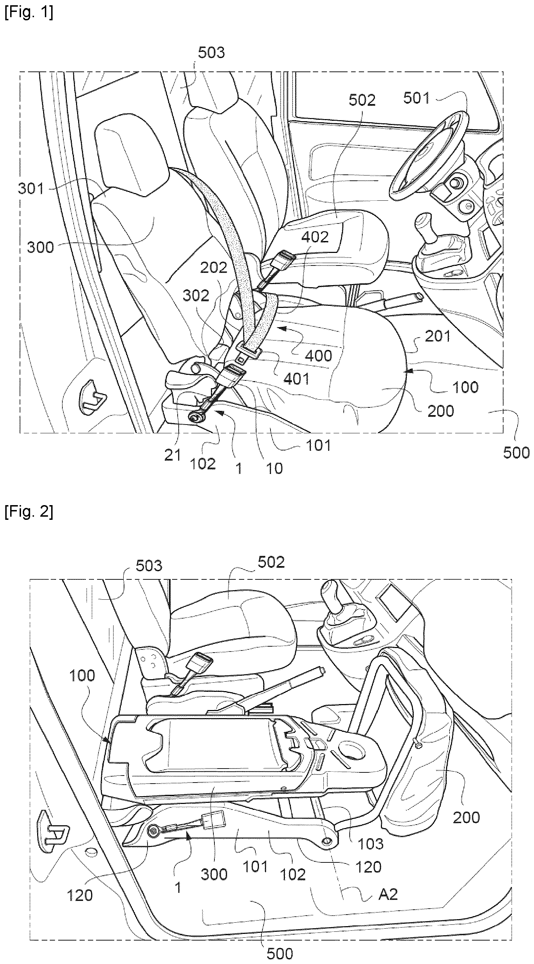

Sur les figures 1 et 2, on a représenté une partie d'un habitacle d'un véhicule automobile.

Dans la description, les termes « avant » et « arrière » seront utilisés par rapport à ce véhicule automobile, l'avant d'un élément désignant le côté de cet élément qui est tourné vers le capot du véhicule et l'arrière désignant le côté de cet élément qui est tourné vers le coffre.

De la même manière, les termes « inférieur » et « supérieur » seront utilisés par rapport à ce véhicule automobile, la partie inférieure d'un élément désignant la partie de cet élément qui est située du côté du plancher du véhicule et la partie supérieure désignant la partie de cet élément qui est située du côté du toit.

On considérera ici que ce véhicule automobile est un « véhicule utilitaire », c'est-à-dire un véhicule comportant uniquement une rangée de sièges. Il ne comporte en revanche pas de siège ou de banquette arrière, puisque l'ensemble de la zone arrière du véhicule constitue un coffre de chargement.

Ici, l'habitacle du véhicule automobile est séparé de ce coffre de chargement par une cloison de séparation 503 pleine ou grillagée.

Si l'invention s'appliquera plus particulièrement à un tel véhicule utilitaire, elle ne se limitera toutefois pas à ce type de véhicule, mais pourra également s'appliquer à tout autre type de véhicule automobile.

Comme le montre la figure 1, le véhicule automobile comporte classiquement un châssis (qui forme notamment le plancher 500 du véhicule), un groupe motopropulseur (non représenté) et un système de direction des roues directrices (qui comprend notamment un volant 501).

Ce véhicule automobile comporte ici exactement deux sièges, dont un siège conducteur 502 situé en face du volant 501, et un siège passager 100 situé à côté du siège conducteur 502. Tel qu'il est représenté sur les figures, le siège passager 100 est situé à droite du siège conducteur 502.

La présente invention porte alors plus précisément sur ce siège passager 100.

Ce siège passager 100 est ici escamotable, c'est-à-dire qu'il peut passer d'une position d'utilisation (représentée sur la figure 1) à une position repliée (également appelée « position Parère », représentée sur la figure 2) de manière à libérer de l'espace de chargement dans le véhicule.

Comme le montre schématiquement la figure 1, ce siège passager 100 comporte une assise 200 et un dossier 300 supportés par une structure porteuse 101.

La structure porteuse 101 pourrait se présenter sous diverses formes. Dans le mode de réalisation représenté, elle comporte deux flancs 102 parallèles, qui sont connectés ensemble par des tubes structurels 103 (figure 2) et qui sont montés sur le plancher 500 du véhicule de façon coulissante (par des rails non visibles sur les figures).

L'assise 200 et le dossier 300 sont montés sur la structure porteuse 101 de façon à pouvoir tous deux basculer sur celle-ci.

En position d'utilisation, l'assise 200 s'étend sensiblement horizontalement (à 20 degrés près) et elle présente un bord avant 201 et un bord arrière 202.

Dans cette position d'utilisation, le dossier 300 est légèrement incliné vers l'arrière (avec un angle compris entre 5 et 45 degrés par rapport à la verticale) et il présente un bord supérieur 301 et un bord inférieur 302.

L'assise 200 est montée mobile en basculement sur la structure porteuse 101 autour d'un axe géométrique avant A2 (voir figure 2). Cet axe géométrique avant A2 est globalement situé à hauteur du bord avant 201 de l'assise 200, sous celle-ci. Il s'étend orthogonalement à l'axe géométrique longitudinal du véhicule automobile. Ainsi, l'assise 200 peut basculer depuis sa position d'utilisation (voir figure 1) jusqu'à une position relevée vers l'avant, sensiblement verticale, en appui contre le tableau de bord du véhicule (voir figure 2).

Le dossier 300 est quant à lui monté mobile en basculement sur la structure porteuse 100 de façon à pouvoir basculer depuis sa position d'utilisation (voir figure 1) jusqu'à une position rabattue vers l'avant, à la place de l'assise 200 (voir figure 2).

Pour assurer cette mobilité, le dossier 300 est préférentiellement relié à la structure porteuse 101 par des bielles. Ces bielles sont réparties de part et d'autre du dossier 300. Chaque bielle est connectée, d'un côté, au dossier 300, et, de l'autre, à la structure porteuse 101, par des axes ci-après appelés « axes de bielle ».

Ici, on peut plus particulièrement s'intéresser à l'un de ces axes de bielle.

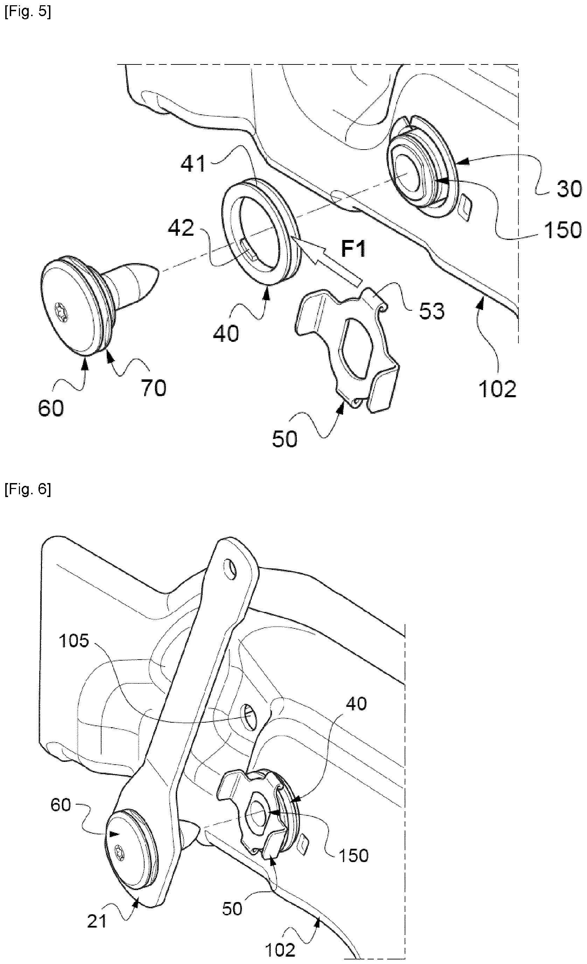

Cet axe de bielle est enfilé, d'une part, au travers d'une ouverture prévue dans l'extrémité basse de l'une des bielles, et, d'autre part, au travers d'une ouverture 105 (voir figure 6) prévue dans l'un des flancs 102 de la structure porteuse 101 (le flanc 102 situé à l'opposé du siège conducteur 502).

Cet axe de bielle est monté de façon à être libre de pivoter à l'intérieur de l'ouverture 105. Il est en revanche couplé à cette bielle, c'est-à-dire fixé en rotation à cette bielle, de manière à pivoter conjointement avec celle-ci.

Ce même flanc 102 présente, à côté de l'ouverture 105, une autre ouverture 104 spécifiquement prévu pour le montage d'un brin-boucle.

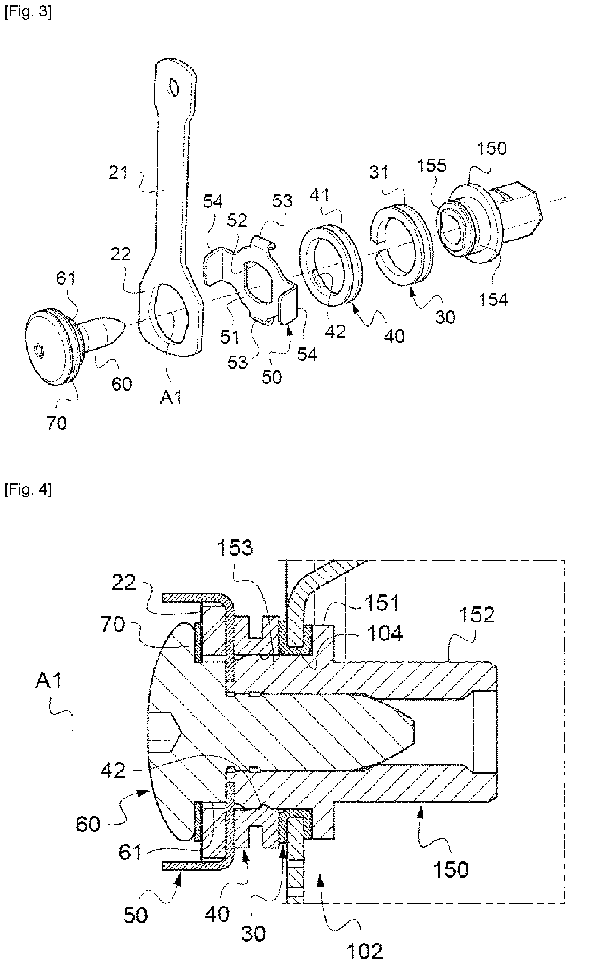

Comme le montre la figure 4, un arbre d'articulation 150 est enfilé, d'une part, au travers de cette ouverture.

Cet arbre d'articulation 150 est monté de façon à être libre de pivoter à l'intérieur de l'ouverture 104 autour de l'axe géométrique de l'ouverture 104, ci-après appelé axe de rotation A1. Il est couplé à la bielle précitée, c'est-à-dire qu'il y est solidarisé de manière à pouvoir pivoter conjointement avec celle-ci.

Ici, comme le montrent les figures 3 et 4, une rondelle fendue 30 est engagée sur le bord de l'ouverture 104. L'arbre d'articulation 150 est alors plus précisément engagé au travers de cette rondelle fendue 30.

Cette rondelle fendue 30 présente une section en U de façon à pouvoir être emboîtée sur le bord de l'ouverture 104. Elle présente ainsi une face interne cylindrique de révolution autour de l'axe de rotation A1, une face externe rainurée par une gorge engagée sur le bord de l'ouverture 104 du flasque 102 et deux faces latérales planes. Son épaisseur (selon l'axe de rotation A1) est supérieure à celle du flasque 102, de sorte qu'elle assure un meilleur guidage en rotation de l'arbre d'articulation 150 autour de l'axe de rotation A1.

Dans le mode de réalisation représenté sur les figures 3 et 4, l'arbre d'articulation 150 présente globalement une forme tubulaire allongée selon l'axe de rotation A1. Il présente, en saillie de sa face externe et à mi-longueur environ, une couronne 151 présentant une symétrie de révolution autour de l'axe de rotation A1. Cette couronne 151 est prévue pour s'appuyer contre un côté de la rondelle fendue 30 (ici le côté intérieur du siège), de façon à bloquer d'un côté cet arbre d'articulation 150 par rapport au flasque 102.

L'arbre d'articulation 150 présente deux parties tubulaires situées de part et d'autre de cette couronne 151. Une première partie 152, située du côté intérieur du flasque 102, présente une section hexagonale. La seconde partie 153, qui est engagée au travers de la rondelle fendue 30 pour faire saillie du côté extérieur du flasque 102, présente une section sensiblement cylindrique de révolution autour de l'axe de rotation A1.

La première partie 152 hexagonale est prévue pour recevoir une came (non visible). Cette came, montée fixe sur l'arbre d'articulation 150, est prévue pour coopérer avec la bielle précitée de manière que le pivotement de la bielle (lorsque le dossier bascule vers l'avant) provoque la rotation de l'arbre d'articulation 150.

Un ressort de torsion permet de rappeler la bielle en position initiale lorsque le dossier est ramené vers l'arrière, en position d'utilisation.

A ce stade, on peut préciser que la came est configurée de façon à permettre à l'arbre d'articulation 150 de pivoter même lorsque le dossier est laissé en position d'utilisation.

De façon classique, comme le montre la figure 1, le siège passager 100 est équipé d'une ceinture de sécurité 400 qui comprend une sangle 402 et une boucle 401 enfilée sur cette sangle 402.

Le siège passager 100 est également équipé d'un dispositif d'accrochage, ci-après appelé brin-boucle 1, permettant d'accrocher facilement la boucle 401.

Ici, le brin-boucle 1 est situé, non pas de manière classique entre les deux sièges, mais au contraire à la droite du siège passager 100 (du côté opposé au siège conducteur 502).

Or, comme le montre la figure 1, la cloison de séparation 503 est partiellement ouverte, dans l'axe du siège passager 100, de façon que des objets de grandes longueurs puissent être chargés en partie dans le coffre de chargement du véhicule et en partie dans l'habitacle, en passant au travers de cette ouverture.

Lorsque le siège passager 100 est en position d'utilisation, il est nécessaire que le brin-boucle 1 soit en position relevée (figure 1) de façon à être accessible au passager.

S'il conservait cette position lorsque le siège passager 100 est en position repliée pour permettre le chargement d'objets de grandes longueurs, il existerait un risque que le brin-boucle 1 forme obstacle au chargement de ces objets.

C'est la raison pour laquelle le brin-boucle 1 est prévu pour s'escamoter automatiquement lorsque le dossier 300 est rabattu vers l'avant.

On peut alors décrire plus en détail l'architecture de ce brin-boucle 1 qui lui permet de s'escamoter automatiquement lorsque le dossier bascule vers l'avant.

Comme le montre la figure 1, le brin-boucle 1 comporte une partie d'assujettissement de la boucle 401, plus généralement connue sous le nom de « gâche 10 ». Cette gâche 10 présente une forme de tulipe classique puisqu'elle comporte un boîtier qui définit une fente d'insertion de la boucle 401 et qui loge un bouton-poussoir permettant de commander le déverrouillage et l'extraction de la boucle 401.

Comme le montre la figure 3, le brin-boucle 1 comporte également une tige 21 allongée qui est vissée, d'un côté, à la gâche 10, et qui forme, de l'autre, une rondelle 22 délimitant un oeillet.

Le brin-boucle 1 comporte également des moyens pour son montage sur l'arbre d'articulation 150, qui sont représentés en détail sur cette figure 3.

Ces moyens de montage comportent ici trois parties principales, à savoir une bague 40, une rondelle d'entraînement 50 et une vis de fixation 60.

Comme le montrent les figures 3 et 4, la bague 40 est engagée sur la seconde partie 153 de l'arbre d'articulation 150, en appui contre le côté extérieur de la rondelle fendue 30.

Ici, cette bague 40 est sensiblement symétrique de révolution autour de l'axe de rotation A1. Elle présente une section en U, si bien qu'elle présente une face interne sensiblement cylindrique de révolution autour de l'axe de rotation A1, une face externe dans laquelle est ménagée en creux une gorge périphérique 41, et deux faces latérales planes.

Elle est ici réalisée en polymère thermoplastique.

Cette bague 40 comporte un moyen d'arrêt adapté à bloquer en translation la bague 40 sur l'arbre d'articulation 150, selon l'axe de rotation A1.

Ce moyen d'arrêt se présente préférentiellement sous la forme d'un ou de plusieurs éléments d'encliquetage. En pratique, la bague comporte trois dents d'encliquetage 42 en saillie sur sa face interne, qui s'étendent sur une partie seulement de la périphérie de la bague (ici sur un secteur angulaire inférieur à 90 degrés, de l'ordre de 10 degrés).

Chaque dent 42 est adaptée à s'engager dans une rainure 154 prévue en correspondance en creux dans la face externe de la seconde partie 153 de l'arbre d'articulation 150 (voir figure 3). Cette rainure 154 s'étend ici tout autour de l'arbre d'articulation 150, de sorte que la dent d'encliquetage 42 peut s'y accrocher quelle que soit la position angulaire de la bague 40 par rapport à l'arbre d'articulation 150 autour de l'axe de rotation A1.

Une fois encliquetée dans cette rainure 154, la bague 40 est donc bloquée en translation par rapport à l'arbre d'articulation 150. De cette manière, l'arbre d'articulation 150 est également bloqué en translation dans le flasque 102, d'un côté par sa couronne 151 et de l'autre par cette bague 40.

La rondelle d'entraînement 50 est conçue pour faire pivoter la tige 21 à la faveur de la rotation de l'arbre d'articulation 150.

Elle se présente ici sous forme d'une pièce monobloc, issue de découpe et de pliage d'un feuillard métallique. En variante, elle pourrait être formée par moulage d'une matière plastique.

Comme le montre la figure 3, cette rondelle d'entraînement 50 comporte une plaque 51 qui est percée d'une ouverture 52 pour son montage sur l'arbre d'articulation 150.

Elle comporte en outre un moyen de blocage en rotation lui permettant de pivoter conjointement avec l'arbre d'articulation 150 autour de l'axe de rotation A1.

Ce moyen de blocage en rotation est ici formé par le bord de l'ouverture 52, qui présente à cet effet une dissymétrie de révolution autour de cet axe de rotation A1.

Plus précisément ici, cette ouverture 52 présente une forme circulaire, avec toutefois deux méplats opposés.

L'arbre d'articulation 150 présente quant à lui, à l'extrémité libre de sa seconde partie 153, un relief 155 dont le bord extérieur présente une forme identique à celle de cette ouverture 52.

Ainsi, lorsque la rondelle d'entraînement 50 est emboîtée sur ce relief 155, elle est bloquée en rotation par rapport à celui-ci.

La rondelle d'entraînement 50 comporte également un moyen d'entraînement de la tige 21, permettant d'entraîner le pivotement de la tige 21 autour de l'axe de rotation A1 à la faveur du pivotement de l'arbre d'articulation 150.

Ce moyen d'entraînement se présente ici sous la forme de deux bras 54 qui s'étendent en saillie à partir du bord périphérique de la plaque 51 et qui sont recourbés à mi-longueur à 90 degrés, du côté de la tige 21.

Ces deux bras 54 sont situés de part et d'autre de la tige 21, de façon à pouvoir venir en butée d'un côté ou de l'autre de celle-ci afin de la forcer à pivoter.

De manière préférentielle, la largeur des bras 54 et leur écart angulaire autour de l'axe de rotation A1 sont choisis de telle manière que la tige 21 peut être montée sans jeu entre les deux bras 54. Ainsi, la rotation de la rondelle d'entraînement 50 entraîne directement la rotation de la tige 21. Pour cela, la pliure des deux bras 54 par rapport à la plaque 51 à ne forme pas un angle droit parfait, mais deux arcs de quart-de-cercle. Au contraire, la tige 21 présente une section parfaitement rectangulaire. Les angles de la tige 21 viennent ainsi naturellement se positionner dans les arcs de quart-de-cercle formés par les deux bras 54, ce qui permet un montage sans jeu de la tige 21 sur la rondelle d'entraînement 50.

Ici, ces deux bras 54 sont situés à cet effet de façon diamétralement opposée par rapport à l'axe de rotation A1.

La rondelle d'entraînement 50 comporte enfin un moyen d'assujettissement permettant de la bloquer en translation selon l'axe de rotation A1 par rapport à la bague 40, dont on rappelle qu'elle est elle-même bloquée en translation sur l'arbre d'articulation 150.

L'objectif est de permettre de bloquer cette rondelle d'entrainement 50 et la bague 40 sur l'arbre d'articulation 50, sans utiliser de vis.

Ici, ce moyen d'assujettissement se présente sous la forme de deux pattes 53 qui s'étendent à partir du bord périphérique extérieur de la plaque 51, de façon diamétralement opposée, et qui sont recourbées du côté de la rondelle 40, en direction l'une de l'autre.

Comme cela a été décrit supra, la bague 40 présente, en creux dans sa face externe, une gorge périphérique 41. Ces deux pattes 53 s'engagent alors dans cette gorge périphérique 41.

Comme le montrent les figures 3 et 4, la vis de fixation 60 est alors prévue pour traverser l'œillet pratiqué dans la rondelle 22 située à l'extrémité inférieure de la tige 21, ainsi que la rondelle d'entraînement 50 et la bague 40 de façon à se visser dans un alésage taraudé prévu dans l'arbre d'articulation 150.

Comme le montre la figure 4, la vis de fixation 60 présente, entre sa tête et son corps fileté, un épaulement 61 de diamètre supérieur au diamètre du corps fileté et au diamètre minimum de l'ouverture 52 prévue dans la rondelle d'entraînement 50.

Cet épaulement 61 présente une symétrie de révolution autour de l'axe de rotation A1. L'oeillet pratiqué dans la rondelle 22 de la tige 21 est engagé sur cet épaulement 61 et il présente à cet effet une forme circulaire de diamètre égal, à un jeu près, au diamètre de cet épaulement 61.

Cet épaulement 61 présente une épaisseur, le long de l'axe de rotation A1, supérieure à celle de la tige 21.

Une rondelle ondulée 70 (communément appelée « rondelle onduflex») s'interpose entre la tige 21 et la tête de la vis 60.

Ainsi, lorsque la vis de fixation 60 est bien serrée dans l'arbre d'articulation 150, l'épaulement 61 appuie contre la rondelle d'entraînement 50 de façon à bien la serrer contre l'extrémité de l'arbre d'articulation 150. En revanche, dans cette position, la tige 21 dispose d'une certaine liberté pour pivoter par rapport à la vis de fixation 60 autour d'un axe perpendiculaire à l'axe de rotation A1.

On peut ainsi considérer que la liaison entre la tige 21 et le flasque 102 est du type rotule.

Sur les figures 5 et 6, on a représenté deux étapes de montage du brin-boucle 1 sur le flasque 102 du siège.

Tout d'abord, la rondelle fendue 30 est rapportée dans l'orifice 104 du flasque 102, en profitant de son élasticité pour l'y installer.

L'arbre d'articulation 150 est alors engagé au travers de cette rondelle fendue 30.

La rondelle d'entraînement 50 est ensuite rapportée sur la bague 40, en la faisant coulisser sur celle-ci selon une direction radiale illustrée sur la figure 5 par la flèche F1. L'objectif est que les extrémités des pattes 53 de la rondelle d'entraînement 50 se trouvent engagées dans la gorge périphérique 41 de la bague 40.

Comme le montre la figure 6, cet ensemble est ensuite engagé sur l'arbre d'articulation 150 de telle sorte que la dent d'encliquetage 42 de la bague 40 se clipse dans la rainure 154 prévue dans cet arbre d'articulation 150 et que l'ouverture 52 de la rondelle d'entraînement 50 s'emboîte sur le relief 155 de cet arbre d'articulation 150.

Dans cette position, l'arbre d'articulation 150, la bague 40 et la rondelle d'entraînement 50 se trouvent solidarisés au flasque 102, dans une position dite imperdable.

On notera ici que les bras 54 de la rondelle d'entraînement 50 présentent des longueurs telles qu'il n'est pas possible de monter la rondelle d'entraînement 50 à l'envers (les bras tournés vers le flasque 102). Ces bras forment donc des moyens de détrompage.

Plus tard (par exemple après livraison du siège dans l'usine d'assemblage du véhicule automobile), la tige 21 peut alors être vissée directement dans l'arbre d'articulation 150, après avoir au préalable engagé cette tige 21 et la rondelle ondulée 70 sur la vis de fixation 60. A ce stade, le brin-boucle 1 se retrouve correctement fixé sur le flasque 102 du siège.

Dès lors, lorsque le dossier basculera vers l'avant, le pivotement de ses bielles provoquera la rotation de l'arbre d'articulation 150 via la came, et donc le basculement du brin-boucle vers l'avant. Le ressort de torsion permettra ensuite de ramener le brin-boucle en position initiale, une fois le dossier ramené en position d'utilisation.

Un intérêt d'utiliser la came est qu'elle permet d'ajuster l'amplitude de la rotation du brin-boucle. Plus précisément, alors que la bielle pivotera sur une amplitude donnée lorsque le dossier sera basculé vers l'avant, le brin-boucle pourra pivoter sur une amplitude différente, adaptée à la configuration du véhicule.

Un intérêt du ressort de torsion est que, si jamais un objet venait percuter le brin-boucle alors que le dossier est en position d'utilisation, le brin-boucle pourrait pivoter vers l'avant sous la force de l'impact (grâce à l'élasticité du ressort), ce qui éviterait toute casse de l'objet et du brin-boucle.

La présente invention n'est nullement limitée au mode de réalisation décrit et représenté, mais l'homme du métier saura y apporter toute variante conforme à l'invention.

Ainsi, il serait possible de monter le brin-boucle sur un autre des axes du siège, par exemple sur l'un des axes des bielles du siège.

Selon une autre variante, on aurait pu prévoir que l'assise du dossier ne soit pas conçue pour basculer et que le dossier soit conçu pour basculer par-dessus l'assise.

## Revendications

1. Dispositif d'accrochage (1) pour une boucle (401) de ceinture de sécurité (400) d'un siège (100) de véhicule automobile, comportant :
- une partie d'assujettissement (10) de ladite boucle (401), située à l'extrémité d'une tige (21),
- un arbre d'articulation (150) adapté à être monté mobile en rotation sur ledit siège (100) autour d'un axe géométrique (A1), et
- des moyens de montage de la tige (21) sur ledit arbre d'articulation (150), **caractérisé en ce que** ces moyens de montage comprennent :
- une bague (40) qui est montée sur l'arbre d'articulation (150) et qui comporte un moyen d'arrêt adapté à bloquer en translation selon ledit axe géométrique (A1) la bague (40) par rapport audit arbre d'articulation (150), et
- une rondelle d'entraînement (50) qui est montée sur l'arbre d'articulation (150) et qui comporte :
¤ un moyen de blocage en rotation permettant de bloquer en rotation autour de l'axe géométrique (A1) la rondelle d'entraînement (50) par rapport à l'arbre d'articulation (150),
¤ un moyen d'entraînement de la tige (21) permettant d'entraîner le pivotement de la tige (21) autour de l'axe géométrique (A1) à la faveur du pivotement de l'arbre d'articulation (150), et
¤ un moyen d'assujettissement permettant de bloquer en translation selon l'axe géométrique (A1) la rondelle d'entraînement (50) par rapport à la bague (40).

2. Dispositif d'accrochage (1) selon la revendication précédente, dans lequel la rondelle d'entraînement (50) comporte une plaque (51) percée d'une ouverture (52) pour son montage sur l'arbre d'articulation (150) et dans lequel le moyen d'assujettissement comporte deux pattes (53) qui s'étendent à partir de la plaque (51), de façon diamétralement opposée, et qui sont recourbées l'une vers l'autre.

3. Dispositif d'accrochage (1) selon la revendication précédente, dans lequel la bague (40) présente, en creux dans sa face externe, une gorge périphérique (41) à l'intérieur de laquelle sont engagées les deux pattes (53).

4. Dispositif d'accrochage (1) selon l'une des revendications précédentes, dans lequel la rondelle d'entraînement (50) comporte une plaque (51) percée d'une ouverture (52) pour son montage sur l'arbre d'articulation (150) et dans lequel le moyen de blocage en rotation est formé par le bord de ladite ouverture (52), qui présente une dissymétrie de révolution autour dudit axe géométrique (A1) et qui est emboîté sur une partie (155) de forme correspondante de l'arbre d'articulation (150).

5. Dispositif d'accrochage (1) selon l'une des revendications précédentes, dans lequel la rondelle d'entraînement (50) comporte une plaque (51) percée d'une ouverture (52) pour son montage sur l'arbre d'articulation (150) et dans lequel le moyen d'entraînement comporte deux bras (54) qui s'étendent à partir de la plaque (51) et qui sont recourbés d'un même côté de la plaque (51).

6. Dispositif d'accrochage (1) selon la revendication précédente, dans lequel les deux bras (54) sont conformés de telle sorte qu'ils sont simultanément au contact de la tige (21).

7. Dispositif d'accrochage (1) selon l'une des revendications précédentes, dans lequel il est prévu une vis de fixation (60) qui est enfilée au travers d'un orifice de la tige (21) et qui est vissée dans l'arbre d'articulation (150), et une rondelle ondulée (70) qui est engagée sur la vis de fixation (60), entre la tête de la vis de fixation (60) et la tige (21).

8. Dispositif d'accrochage (1) selon l'une des revendications précédentes, dans lequel le moyen d'arrêt comporte un élément d'encliquetage de la bague (40) sur ledit arbre d'articulation (150).

9. Siège (100) de véhicule automobile comportant :
- un support (101),
- une assise (200) montée sur le support (101), et
- un dossier (300) monté sur le support (101) avec une mobilité de basculement, **caractérisé en ce qu'**il comporte un dispositif d'accrochage (1) conforme à l'une des revendications précédentes, dont l'arbre d'articulation (150) est adapté à pivoter à la faveur du basculement du dossier (300) par rapport au support (101).

10. Véhicule automobile comportant :
- un châssis (500),
- un siège conducteur (502) monté sur le châssis (500) en face d'un volant (501),
- un siège passager (100) monté sur le châssis (500) à côté du siège conducteur (502),
**caractérisé en ce que** le siège passager (100) est conforme à la revendication précédente.

## Patentansprüche

1. Befestigungsvorrichtung (1) für ein Schloss (401) eines Sicherheitsgurts (400) eines Kraftfahrzeugsitzes (100), umfassend:
- einen Teil (10) zur Sicherung des Schlosses (401), der sich am Ende eines Schafts (21) befindet,
- eine Gelenkwelle (150), die dazu geeignet ist, um eine geometrische Achse (A1) drehbar am Sitz (100) angebracht zu sein, und
- Mittel zur Montage des Schafts (21) an der Gelenkwelle (150), **dadurch gekennzeichnet, dass** diese Montagemittel Folgendes umfassen:
- einen Ring (40), der auf der Gelenkwelle (150) montiert ist und ein Arretierungsmittel aufweist, das dazu geeignet ist, den Ring (40) in Bezug auf die Gelenkwelle (150) gegen eine Translation entlang der geometrische Achsen (A1) zu blockieren, und
- eine Mitnehmerscheibe (50), die auf der Gelenkwelle (150) montiert ist und Folgendes aufweist:
• ein Drehblockiermittel, das es ermöglicht, die Mitnehmerscheibe (50) in Bezug auf die Gelenkwelle (150) gegen eine Drehung um die geometrische Achse (A1) zu blockieren,
• ein Antriebsmittel für den Schaft (21), das es ermöglicht, das Schwenken des Schafts (21) um die geometrische Achse (A1) zugunsten einer Schwenkbewegung der Gelenkwelle (150) zu bewirken, und
• ein Sicherungsmittel, das es ermöglicht, die Mitnehmerscheibe (50) in Bezug auf den Ring (40) gegen eine Translation entlang der geometrischen Achse (A1) zu blockieren.

2. Befestigungsvorrichtung (1) nach dem vorangehenden Anspruch, wobei die Mitnehmerscheibe (50) eine Platte (51) mit einer Öffnung (52) für ihre Montage auf der Gelenkwelle (150) aufweist und wobei das Sicherungsmittel zwei Laschen (53) aufweist, die sich diametral gegenüberliegend von der Platte (51) erstrecken und zueinander gebogen sind.

3. Befestigungsvorrichtung (1) nach dem vorangehenden Anspruch, wobei der Ring (40) in seiner Außenseite vertieft eine Umfangsnut (41) aufweist, in deren Inneres die beiden Laschen (53) eingreifen.

4. Befestigungsvorrichtung (1) nach einem der vorangehenden Ansprüche, wobei die Mitnehmerscheibe (50) eine Platte (51) mit einer Öffnung (52) für ihre Montage auf der Gelenkwelle (150) aufweist und wobei das Drehblockiermittel durch den Rand der Öffnung (52) ausgebildet ist, der eine Rotationsasymmetrie um die geometrische Achse (A1) aufweist und auf einen entsprechend geformten Teil der Gelenkwelle (150) aufgesteckt ist.

5. Befestigungsvorrichtung (1) nach einem der vorangehenden Ansprüche, wobei die Mitnehmerscheibe (50) eine Platte (51) mit einer Öffnung (52) für ihre Montage auf der Gelenkwelle (150) aufweist und wobei das Antriebsmittel zwei Arme (54) aufweist, die sich von der Platte (51) erstrecken und auf einer gleichen Seite der Platte (51)gebogen sind.

6. Befestigungsvorrichtung (1) nach dem vorangehenden Anspruch, wobei die beiden Arme (54) so geformt sind, dass sie gleichzeitig mit dem Schaft (21) in Kontakt stehen.

7. Befestigungsvorrichtung (1) nach einem der vorangehenden Ansprüche, wobei eine Befestigungsschraube (60), die durch eine Öffnung des Schafts (21) geführt und in die Gelenkwelle (150) eingeschraubt ist, und eine gewellte Unterlegscheibe (70), die zwischen dem Kopf der Befestigungsschraube (60) und dem Schaft (21) auf die Befestigungsschraube (60) aufgesteckt ist, vorgesehen sind.

8. Befestigungsvorrichtung (1) nach einem der vorangehenden Ansprüche, wobei das Arretierungsmittel ein Element zum Einrasten des Rings (40) auf der Gelenkwelle (150) umfasst.

9. Kraftfahrzeugsitz (100), umfassend:
- einen Träger (101),
- eine auf dem Träger (101) montierte Sitzfläche (200) und
- eine kippbeweglich auf dem Träger (101) montierte Rückenlehne (300), **dadurch gekennzeichnet, dass** er eine Befestigungsvorrichtung (1) nach einem der vorangehenden Ansprüche aufweist, deren Gelenkwelle (150) dazu geeignet ist, zugunsten des Kippens der Rückenlehne (300) in Bezug auf den Träger (101) zu schwenken.

10. Kraftfahrzeug, umfassend:
- einen Rahmen (500),
- einen auf dem Rahmen (500) gegenüber einem Lenkrad (501) montierten Fahrersitz (502),
- einen auf dem Rahmen (500) neben dem Fahrersitz (502) montierten Beifahrersitz (100), **dadurch gekennzeichnet, dass** der Beifahrersitz (100) dem vorangehenden Anspruch entspricht.

## Claims

1. Securing device (1) for a tongue (401) of a safety belt (400) of a motor vehicle seat (100), having:
- a part (10) for capturing said tongue (401), situated at the end of a stem (21),
- an articulation shaft (150) designed to be mounted so as to be able to move in rotation on said seat (100) about a geometric axis (A1), and
- means for mounting the stem (21) on said articulation shaft (150),
**characterized in that** these mounting means comprise:
- a ring (40) that is mounted on the articulation shaft (150) and has a stop means designed to prevent translation, along said geometric axis (A1), of the ring (40) with respect to said articulation shaft (150), and
- a drive washer (50) that is mounted on the articulation shaft (150) and has:
¤ a rotation-prevention means making it possible to prevent rotation, about the geometric axis (A1), of the drive washer (50) with respect to the articulation shaft (150),
¤ a means for driving the stem (21) that makes it possible to drive the pivoting of the stem (21) about the geometric axis (A1) by virtue of the pivoting of the articulation shaft (150), and
¤ a capturing means that makes it possible to prevent translation, along the geometric axis (A1), of the drive washer (50) with respect to the ring (40).

2. Securing device (1) according to the preceding claim, wherein the drive washer (50) has a plate (51) pierced with an opening (52) for the mounting thereof on the articulation shaft (150) and wherein the capturing means has two tabs (53) that extend from the plate (51), in a diametrically opposite manner, and are curved towards one another.

3. Securing device (1) according to the preceding claim, wherein the ring (40) has, recessed into its external face, a peripheral groove (41) inside which the two tabs (53) are engaged.

4. Securing device (1) according to one of the preceding claims, wherein the drive washer (50) has a plate (51) pierced with an opening (52) for the mounting thereof on the articulation shaft (150) and wherein the rotation-prevention means is formed by the edge of said opening (52), which exhibits asymmetry of revolution about said geometric axis (A1) and is fitted onto a part (155) of corresponding shape of the articulation shaft (150).

5. Securing device (1) according to one of the preceding claims, wherein the drive washer (50) has a plate (51) pierced with an opening (52) for the mounting thereof on the articulation shaft (150) and wherein the drive means has two arms (54) that extend from the plate (51) and are curved on one and the same side of the plate (51).

6. Securing device (1) according to the preceding claim, wherein the two arms (54) are shaped such that they are simultaneously in contact with the stem (21).

7. Securing device (1) according to one of the preceding claims, wherein there is provided a fastening screw (60) that is threaded through an orifice in the stem (21) and is screwed into the articulation shaft (150), and a wave washer (70) that is engaged on the fastening screw (60), between the head of the fastening screw (60) and the stem (21) .

8. Securing device (1) according to one of the preceding claims, wherein the stop means has an element for snap-fastening the ring (40) onto said articulation shaft (150).

9. Motor vehicle seat (100) having:
- a support (101),
- a seat pan (200) mounted on the support (101), and
- a backrest (300) mounted on the support (101) with the ability to tilt,
**characterized in that** it has a securing device (1) in accordance with one of the preceding claims, of which the articulation shaft (150) is designed to pivot by virtue of the tilting of the backrest (300) with respect to the support (101).

10. Motor vehicle having:
- a chassis (500),
- a driver seat (502) mounted on the chassis (500) facing a steering wheel (501),
- a passenger seat (100) mounted on the chassis (500) next to the driver seat (502),
**characterized in that** the passenger seat (100) is in accordance with the preceding claim.
